## Europäisches Patentamt
## European Patent Office
## Office européen des brevets

(19)

(11) Numéro de publication: **0 033 260**

**B1**

(12) **FASCICULE DE BREVET EUROPEEN**

(45) Date de publication du fascicule du brevet: **21.11.84**

(21) Numéro de dépôt: **81400055.0**

(22) Date de dépôt: **16.01.81**

(51) Int. Cl.³: **B 65 B 55/06, B 29 C 17/03**

(54) Procédé et dispositif de stérilisation d'une bande thermoplastique servant au thermoformage de récipients stériles.

(30) Priorité: **17.01.80 FR 8001030**

(43) Date de publication de la demande:
**05.08.81 Bulletin 81/31**

(45) Mention de la délivrance du brevet:
**21.11.84 Bulletin 84/47**

(84) Etats contractants désignés:
**DE FR GB IT NL SE**

(56) Documents cités:
**CH-A- 421 497**
**DE-B-1 180 118**
**FR-A-1 198 791**
**FR-A-2 335 404**
**FR-A-2 442 124**

**MODERN PACKAGING, vol. 47, no. 2, février 1974, pages 37-40, New York, U.S.A., R.J. KELSEY: "Aseptic-packaging-machine design" KUNSTSTOFFTECHNIK, vol. 13, no. 6, juin 1974, pages 118-121, Mainz, DE., A. HOGER: "Infrarotstrahler zur Erwärmung von thermoplastischem Halbzeug"**

(73) Titulaire: **ETUDE ET REALISATION DE CHAINES AUTOMATIQUES E.R.C.A. Société Anonyme dite:**
**Z.I. de Courtaboeuf Avenue du Pacifique B.P. 54 F-91402 Orsay (FR)**

(72) Inventeur: **Torterotot, Roland**
**Château du Plessis Mornay**
**F-78730 Longvilliers (FR)**

(74) Mandataire: **Hasenrader, Hubert et al Cabinet BEAU DE LOMENIE 55, rue d'Amsterdam F-75008 Paris (FR)**

Courier Press, Leamington Spa, England.

## Description

La présente invention concerne un procédé de stérilisation et de ramollissement d'une bande thermoplastique avancée pas à pas et destinée à la fabrication de récipients thermoformés, qui, après leur formage, sont remplis et scellés dans une atmosphère stérile, procédé selon lequel on soumet des zones successives de ladite bande à un traitement thermique pour assurer le ramollissement suffisant au thermoformage et la stérilisation de ladite bande, cette dernière opération étant réalisée pendant une durée déterminée, à une température comprise entre 180°C et 230°C.

Un procédé de stérilisation du type précité est connu, par exemple, par le brevet français 2 335 404. Comme dans ce cas, le ramollissement de la bande thermoplastique sur toute son épaisseur est assuré en même temps que la stérilisation, le temps de traitement est relativement long (supérieur à dix secondes), de sorte que la matière thermoplastique de la bande a tendance à fluer et doit être soutenue par une bande métallique de support à travers laquelle on apporte d'ailleurs à la matière thermo-plastique un partie importante de la chaleur de stérilisation. Pour ramener la température de la bande thermoplastique stérilisée à une température de ramollissement appropriée au thermoformage et pour favoriser le décollement de la bande thermoplastique de la bande métallique de support, il faut prévoir des moyens de refroidissement qui provoquent un certain rétrécissement de la bande thermo-plastique facilitant ledit décollement. Toute-fois, ce décollement est souvent irrégulier et conduit à des récipients thermoformés dont la paroi latérale et le fond sont déchirés ou trop minces et très fragiles.

On connaît aussi un procédé de stérilisation d'une bande thermoplastique selon lequel on soumet ladite bande à un traitement thermique à une température déterminée ou des températures décroissantes pendant des durées déterminées et l'on maintient dans une atmosphère stérile la bande thermoplastique et ultérieurement les récipients thermoformes pendant leur remplissage jusqu'à leur obturation étanche. Jusqu'à présent, ce traitement thermique s'effectue à l'intérieur de l'enceinte d'une boîte de chauffe qui comporte des résistances rayonnant directement en direction de la bande thermoplastique ou noyées dans une plaque de contact revêtue d'une couche de matière plastique telle que le PTFE et qui permet de porter ladite bande à la température de ramollissement appropriée au thermoformage ultérieur. Le temps de séjour de la bande thermoplastique dans l'enceinte de la boîte de chauffe doit être assez grand si, à la température de ramollissement de la matière thermoplastique considérée, l'on veut obtenir une stérilisation pas trop mauvaise ou insignifiante. Ceci nécessite l'emploi d'une boîte de chauffe très longue pratiquement incompatible avec l'exigence d'une installation de conditionnement stérile et compacte.

Dans les installations de conditionnement stérile de produits, installation du type qui forme des récipients à partir d'une bande thermoplastique, remplit et scelle lesdits récipients, ceux-ci et la bande thermoplastique à laquelle ils restent attachés jusqu'à leur découpe, sont avancés pas à pas de sorte que la bande ramollie est également soumise à des forces d'accélération et de décélération. Pour éviter que ces forces aient une influence trop néfaste sur la bande qui peut avoir des largeurs dépassant cinquante centimètres, on la soutient soit par des chaînes de transport (brevet français 2.028.765), soit par une bande de support sans fin qui s'étend sur toute la largeur de la bande thermoplastique (brevet français 2.335.404).

Afin d'éviter la formation de poches sans être obligé de prévoir des moyens de support ou de soutien autres que les moyens de transport latéraux, il a déjà été proposé de chauffer par contact direct jusqu'à la température de ramollissement seulement les parties de la bande qui formeront ultérieurement le fond et la paroi latérale des récipients, et de laisser à une température plus faible les parties constituant par la suite les bords des récipients. On obtient ainsi dans la bande thermoplastique une grille de matière qui est plus résistante mécaniquement mais qui n'est pas stérile ou nécessite un traitement thermique plus long d'où il résulte encore un allongement supplémentaire de la boîte de chauffe.

On sait qu'une stérilisation efficace et bonne nécessite des températures élevées qui peuvent atteindre 250°C ou plus (brevet français 1.198.791). Dans ce cas, les bandes en matière thermoplastique doivent reposer sur un support et être refroidies énergiquement sur le côté opposé à celui exposé à la chaleur, afin d'éviter une détérioration de la bande thermoplastique. Cette manière de procéder constitue un gaspillage considérable en énergie et ne peut s'appliquer au thermoformage des récipients.

Il a été constaté que certaines bactéries ou autres organismes polluants ne sont pas détruits par le traitement thermique connu servant au ramollissement de la bande thermoplastique préalablement au thermoformage de sorte que ces organismes se développent après le remplissage des récipients thermoformés avec un produit, par exemple alimentaire, et détériorent rapidement ledit produit malgré le scellement étanche desdits récipients. Il s'est avéré que le temps nécessaire au ramollisse-ment de la bande thermoplastique est plus court que celui nécessaire à la stérilisation de ladite bande à la température de ramollissement et que ladite bande se déforme d'une façon incontrôlable lorsqu'on la garde à la température de ramollissement pendant le temps nécessaire à la stérilisation.

La présente invention supprime ces inconvénients et a pour but de réaliser, dans le cadre d'une installation de conditionnement stérile, un procédé et un dispositif de stérilisation de la surface d'une bande thermoplastique, qui assurent un degré de stérilisation efficace sans pour autant chauffer trop longtemps la bande thermoplastique sur toute son épaisseur au-delà de ou à sa température de ramollissement.

Pour le procédé de stérilisation du type mentionné au début, ce but est atteint du fait que, préalablement aux opérations de thermoformage, de remplissage et de scellement des récipients dans une enceinte stérile, on expose uniformément, de façon intermittent, par zones successives et pendant un laps de temps maximal de cinq secondes, la surface de cette bande constituant ultérieurement la face intérieure des récipients, à une chaleur sèche qui est produite par du rayonnement infrarouge d'une longueur d'onde adaptée au chauffage de surface, et que le temps de stérilisation à l'intérieur du laps de temps de cinq secondes est si court que ladite bande thermoplastique n'est portée que dans une couche superficielle très mince à la température égale ou supérieure à la température de ramollissement, tandis que la plus grande partie de l'épaisseur de la bande reste en dessous de la température de ramollissement.

Grâce à cette conception, l'énergie thermique nécessaire à la stérilisation est transmise rapidement à la bande thermoplastique seulement en surface sur une épaisseur très faible, par exemple de l'ordre de 1/10e de millimètre, le cas échéant, en tenant compte de la température initiale de ladite bande, et de sorte que seulement sa surface constituant la face intérieure des récipients soit portée à une température élevée qui détruit tous les organismes polluants sans que la bande thermoplastique elle-même soit fondue, brûlée ou détériorée d'une façon quelconque. Il est avantageux de procéder au traitement stérilisant avant l'opération de ramollissement de la bande thermoplastique dans une boîte de chauffe de conception connue, car dans ce cas, les calories apportées par le traitement stérilisant servent aussi partiellement au ramollissement de ladite bande. Cependant, il va de soi que le traitement stérilisant peut aussi intervenir après l'opération de ramollissement préparatoire pour le thermoformage. Pour éviter toute nouvelle pollution de la face stérilisée de la bande thermoplastique, il suffit alors de maintenir cette face stérilisée en une atmosphère stérile jusqu'à la fermeture des récipients.

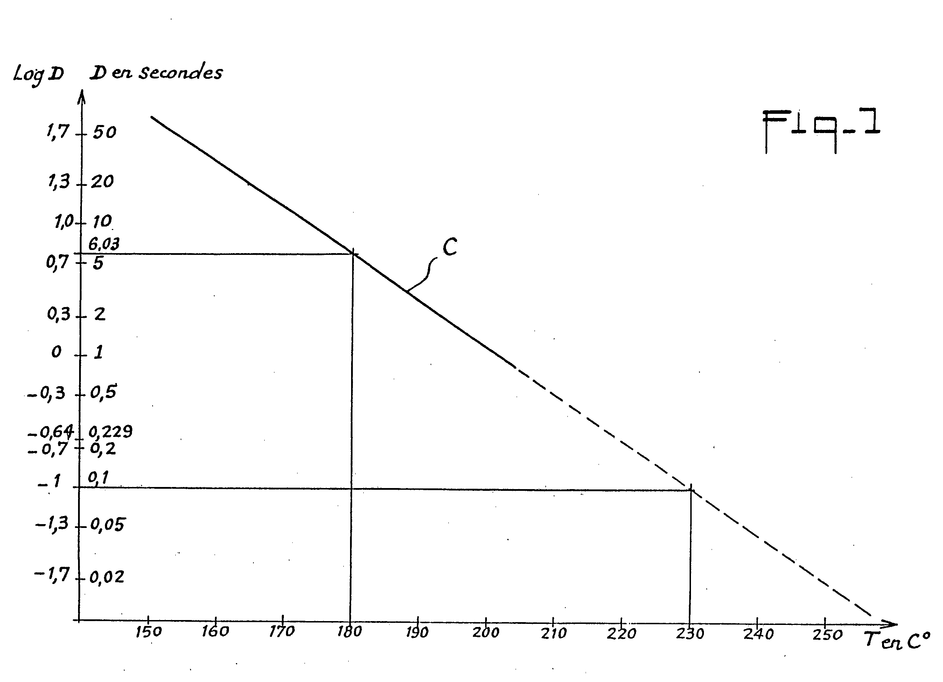

Il a été constaté en laboratoire que le temps de stérilisation, c'est-à-dire le temps de traitement thermique $t$ exprimé en secondes et nécessaire pour détruire $10^n$ bactéries par la chaleur sèche est, pour une température T donnée, égal au produit de l'exposant n à base 10 du nombre des bactéries à détruire et de la valeur de D lue sur le diagramme ($t=n \times D$) représenté sur la figure 1.

Du fait que, le cas échéant, l'on mesure par le palpeur thermique la température atteinte soit à la surface de la bande thermoplastique, surface formant ultérieurement le face intérieure des récipients, soit de préférence à la surface opposée, on peut sans difficulté tenir compte aussi de l'épaisseur de la bande thermoplastique et du coefficient de conductivité thermique de la matière constitutive de ladite bande. Il importe également, dans le cadre de la présente invention, que l'action du traitement thermique stérilisant puisse être interrompue de façon instantanée dès la réponse du palpeur thermique.

En tenant compte de ces faits et de l'enseignement technique indiqué par l'invention, il est possible, pour une température stérilisante donnée à appliquer uniformément à la surface à traiter de la bande thermoplastique, de déterminer le temps minimum requis pour détruire un nombre déterminé de bactéries. Cette détermination est réalisée par exemple à l'aide de l'organisme de référence bacillus subtilis var. niger, bactérie la plus résistante à la chaleur et appartenant au groupe des mésophiles constituant les bactéries et organismes les plus couramment présents dans les produits alimentaires.

Sur le dessin annexé, est représenté un diagramme qui fait partie intégrante de l'invention et qui montre, pour une température de traitement en degrés Celsius donnée, la valeur de D nécessaire en secondes pour obtenir une réduction de 90% des spores présents, le temps de traitement minimal $t$ pour un nombre $10^n$ de spores étant celui résultant du produit de l'exposant n et la valeur de D en secondes lue sur le diagramme. On considère que la stérilité superficielle est acceptable à partir de n=3 et qu'elle est très bonne pour n=6.

Ce diagramme fait comprendre que dans une boîte de chauffe connue travaillant par exemple à une température de ramollissement de 130°C, le temps de séjour minimal en secondes de la bande thermoplastique devrait être au moins de l'ordre de n×D, pour $10^n$ spores à détruire. Si l'on prend pour n une valeur très faible, par exemple 3, on obtient à partir du diagramme Log D=2,51; D=325 et t=3×325=975 secondes, ce qui fait plus de 16 minutes. On comprend maintenant pourquoi les boîtes de chauffe ne peuvent pas servir à la stérilisation efficace.

Le traitement thermique intermittent par rayonnement infrarouge de la surface de la bande thermoplastique est réalisé avec une température de rayonnement telle qu'on puisse porter et maintenir la surface de ladite bande à une température d'au moins 180°C pendant le laps de temps imparti au chauffage stérilisant et ne dépassant pas cinq secondes par période de traitement. Bien entendu, des températures jusqu'à 230°C sont également possibles pourvu que le traitement thermique intermittent soit interrompu d'une façon très précise à l'instant déterminé, par exemple détecté par le palpeur thermique en contact avec la bande thermoplastique, car avec des températures aussi élevées le risque de brûler et de détériorer la bande thermoplastique est très grand. De ce fait, il est avantageux d'utiliser des résistances sans inertie thermique notable et capables de monter à la température de service en moins d'1/10e seconde.

En extrapolant le diagramme annexe, on constate que pour une température T égale à 202°C, la valeur de D est de l'ordre de 1 seconde, et pour une température T égale à 230°C, la valeur de D est de l'ordre de 0,1 seconde. De ce fait, les temps de stérilisation sèche à des températures élevées (180°C à 230°C) sont très courts, même lorsque la valeur de n (degré d'efficacité stérilisatrice) est importante (au moins égale à 6).

Ainsi, dans une installation de conditionnement stérile de produits du type F.F.S. (abréviation pour la dénomination en anglais "form" (former) "fill" (remplir) "seal" (sceller), pour un degré d'efficacité stérilisatrice n=6, les temps de stérilisation sèche sont au moins égaux à 6 secondes pour T=202°C et à 0,6 seconde pour T=230°C.

On comprendra que dans une installation de conditionnement à cadence élevée des cycles de travail, par exemple 30 cycles/minute, il reste 2,0 secondes par cycle dont 1,5 seconde sont à consacrer à l'arrêt et 0,5 seconde au transfert ou avancement d'un pas de la bande thermoplastique. Pour assurer la stérilisation sèche d'une zone déterminée (surface déterminée par la largeur de la bande et la longueur d'un à trois pas d'avance — un pas d'avance correspondant à la largeur d'un ou plusieurs récipients prise dans le sens d'avance de la bande thermoplastique —), on choisira donc une température T qui, selon le degré d'efficacité stérilisatrice n désiré, permet d'assurer la stérilisation sèche de la zone considérée pendant le temps d'arrêt de la bande entre deux pas d'avancement. Compte tenu des risques de brûlures ou de détérioration de la bande thermoplastique, risques croissant de façon exponentielle avec l'augmentation de la température. Il est préférable que les températures de traitement ne dépassent pas 230°C et de doubler ou de tripler les traitements stérilisants en donnant à la zone à traiter par stérilisation sèche une longueur correspondant à deux ou trois pas d'avance. Ainsi, pour une température de stérilisation de 210°C, on obtient D=0,5, de sorte que pour n=6, la durée de traitement stérilisant t est égale à trois secondes. De ce fait, il faut exposer la bande pendant ses arrêts, à un traitement stérilisant pendant deux fois 1,5 seconde et donc donner à la zone de traitement une longueur de deux pas d'avance.

Comme précédemment mentionné, l'invention concerne aussi un dispositif de chauffage stérilisant d'une bande thermoplastique avancée pas à pas et destinée à la fabrication de récipients thermoformés, remplis et scellés dans une atmosphère stérile, du type comprenant dans une enceinte stérile des résistances de chauffage de stérilisation (vois FR—A—2335404).

Dans ce genre ce dispositif de chauffage, les résistances de chauffage présentent une inertie thermique trop importante aux températures élevées préconisées pour la stérilisation de sorte que leur emploi entraîne des risques graves de brûler et de détériorer la bande thermoplastique.

La présente invention supprime cet inconvénient en proposant des résistances de chauffage qui sont du type à réponse thermique instantanée et qui sont raccordées, de façon intermittente, à une source de tension pour une durée règlable par l'intermédiaire d'un circuit de commande, comprenant, par exemple, un palpeur thermique appliqué contre la bande thermoplastique.

Le palpeur thermique est associé de préférence à la face inférieure de la bande thermoplastique, c'est-à-dire la face non directement exposée à l'action des rayons thermiques stérilisants et non stérilisée. Les températures détectées par le palpeur dépendent du coefficient de conductibilité thermique et de l'épaisseur de la matière constituant la bande thermoplastique et seront inférieures à la température de la face stérilisée. On déterminera par expérimentation, pour chaque bande thermoplastique, la température de seuil détectée par le palpeur et à partir de laquelle on commande l'extinction des résistances de chauffage stérilisant. Après la détermination d'une température de stérilisation convenable, le palpeur thermique peut être mis hors service.

Pour stériliser une face de la bande thermoplastique par éclats successifs de chaleur, il est avantageux d'utiliser des résistances en forme de bâton qui sont disposées parallèlement à une très faible distance de la bande thermoplastique et qui s'étendent transversalement par rapport à la bande thermoplastique sur toute la largeur utile de celle-ci. La distance entre les axes des résistances de chauffage et la face supérieure plane de la bande thermoplastique est choisie de telle sorte que le rayonnement soit réparti uniformément au niveau de la zone à stériliser.

On utile comme bâtons de chauffage des émetteurs de rayonnement infrarouge à ondes courtes constitués de tubes en verre de silice avec face arrière métallisée. Le maximum d'émission de rayonnement de ces bâtons chauffants se situe aux longueurs d'onde comprises entre 1,2 $\mu$m et 1,4 $\mu$m.

Bien que la température de service des résistances de chauffage stérilisant puisse être supérieure à la température de décomposition de la matière constitutive de la bande thermoplastique, on veillera, à l'aide du palpeur de température précité à ce que la température du traitement stérilisant ne dépasse pas la valeur prédéterminée. Il importe aussi que la température stérilisante ne soit pas appliquée à la surface de la bande thermoplastique pendant une durée supérieure à la durée de traitement prédéterminée. A cet effet, il est avantageux de relier l'interrupteur du circuit d'alimentation des bâtons chauffants à une horloge qui coupe le circuit dès que la durée de traitement s'est écoulée, la mise en service dudit circuit étant réalisée après chaque pas d'avance de la bande thermoplastique, c'est-à-dire au nouvel arrêt de ladite bande.

Il se comprend de soi-même que ce traitement stérilisant a lieu dans une enceinte stérile remplie d'une atmosphère stérile.

Il est également avantageux d'utiliser les bâtons de chauffage du type précité pour la construction de la boîte de chauffage servant au ramollissement de la bande thermoplastique en vue de son thermoformage en récipients restant attachés à ladite bande.

Dans ce cas, on porte les bâtons de chauffage à une température plus faible, de l'ordre de 110°C à 130°C pendant une durée suffisante pour que la matière de la bande thermoplastique soit ramollie sur toute son épaisseur. Ceci est obtenu en appliquant aux résistances de chauffage (bâtons de chauffage) une tension plus faible que celle appliquée aux bâtons de chauffage destinés au traitement stérilisant.

L'avantage d'utiliser des bâtons de chauffage du type précité — qui ont une faible inertie calorifique, une forte concentration énergétique et sont à puissance variable si on leur applique une tension variable — dans des boîtes de chauffage de ramollissement de la matière thermoplastique, réside dans le fait qu'ils permettent l'emploi d'une enceinte stérile qui peut rester en place même lorsqu'on arrête le chauffage de ramollissement et le transport de la bande thermoplastique. En effet, dans le cas d'une boîte de chauffe connue, il faut écarter celle-ci de la bande thermoplastique en cas d'arrêt de la bande pour éviter de brûler celle-ci, car même après avoir coupé les résistances chauffantes classiques, leur température diminue trop lentement en raison de leur grande inertie thermique. Il en résulte que, la stérilité de l'enceinte à l'endroit de la boîte de chauffe est détruite à chaque arrêt de la bande thermoplastique ou bien c'est ladite bande qui est brûlée. Pour laisser la boîte de chauffe en place lors de l'arrêt de la bande, on a déjà proposé d'interposer rapidement en écran entre les résistances de chauffage et la bande thermoplastique, mais cet écran vient d'une atmosphère polluée et détruit donc la stérilité de la boîte de chauffe.

Grâce à l'emploi de bâtons de chauffe du type précité pour des boîtes de chauffe servant au ramollissement de la bande thermoplastique, la chaleur rayonnée par lesdits bâtons tombe très rapidement, dès la coupure de l'alimentation desdits bâtons, en-dessous d'une valeur qui risquerait d'endommager la bande thermoplastique à l'arrêt.

Les résistances de chauffage stérilisant et les résistances de chauffage ramollisant (c'est-à-dire servant au ramollissement de la bande thermoplastique) disposées du côté à stériliser de la bande thermoplastique peuvent être montées dans la même enceinte stérile, en vue d'éviter toute perte d'atmosphère ou de fluide stérile au passage de la bande thermoplastique de la zone de stérilisation à la zone de ramollissement de ladite bande. Il se comprend de soi-même que dans la zone de ramollissement, la bande thermoplastique peut être chauffée des deux côtés avec deux boîtes de chauffe disposées de part et d'autre de la dite bande.

Pour le chauffage de ramollissement de la bande, on peut donc également utiliser un rayonnement infrarouge intermittent — à l'intérieur d'un cycle de travail compris entre deux avances successives de la bande thermoplastique dont la longueur d'onde sera adaptée à une bonne pénétration de la matière thermoplastique, c'est-à-dire à une bonne absorption de ce rayonnement par la matière thermoplastique à chauffer. Autrement dit, on utilisera avantageusement un rayonnement infrarouge dont la température est supérieure à la température de ramollissement de la matière à chauffer et dont la longueur d'onde est adaptée à une bonne absorption par ladite matière. Bien entendu, dans ce cas, le temps de chauffage pour le ramollissement de la zone de bande thermoplastique stationnant, passagèrement dans la boîte de chauffe est plus court que l'intervalle de temps compris entre deux avances successives de la bande thermoplastique. Dans certains cas, le temps de chauffage de ramollissement à rayonnement infrarouge, intermittent, peut être aussi court que la durée d'une période de chauffage de stérilisation entre deux avances successives de la bande thermoplastique. Cette disposition permet de faire varier la vitesse de travail de l'installation de thermoformage à l'intérieur du laps de temps correspondant à la différence entre le temps de cycle de travail normal (chauffage de ramollissement=temps compris entre deux avances successives de la bande thermoplastique) et le temps maximal de chauffage intermittent à rayonnement infrarouge (durée d'un cycle de chauffage de ramollissement intermittent incluant en parallèle le temps de chauffage stérilisant éclair) qui pour une bande thermoplastique donnée reste constant et est fonction de la nature et de l'épaisseur du matériau plastique à stériliser et à chauffer.

L'objet de la présente invention s'applique non seulement aux bandes thermoplastiques servant au thermoformage des récipients, mais aussi aux bandes à couvercle dont la surface viendra se placer contre le bord desdits récipients et doit donc également être stérile. Ces bandes à couvercle sont soit entièrement en matière, thermoplastique lorsqu'ils doivent être thermoformés, soit partiellement en matière thermoplastique lorsqu'ils sont scellés à plat sur les bords des récipients. Dans ce dernier cas, la matière thermoplastique de la bande à couvercle est un film qui adhère sur une bande de support par exemple en aluminium.

Bien entendu, là encore, la face à stériliser de la bande à couvercle passe dans une enceinte stérile à partir de la zone de stérilisation jusqu'à la zone de scellement des couvercles sur les récipients.

L'objet de l'invention est décrit ci-après sous forme de plusieurs modes de réalisation faisant partie intégrante d'une installation de conditionnement stérile du type F.F.S. et illustrés sur le dessin annexé sur lequel:

— la figure 1 est un diagramme montrant la relation connue entre la température de stérilisation en °C (abscisse) et la durée minimale d'application D, soit en secondes, soit en LogD (ordonnée) pour obtenir par la chaleur sèche une destruction de 90% de bactéries du type dit bacillus subtilis var. niger;

— la figure 2 montre schématiquement une installation de conditionnement stérile dans laquelle une bande thermoplastique est avancée pas à pas;

— la figure 3 est une vue schématique d'une enceinte stérile comportant le dispositif stérilisant et la boîte de chauffage de ramollissement;

— la figure 4 est un schéma illustrant les traitements thermiques auxquels est exposée la bande thermoplastique avant le thermoformage des récipients;

— la figure 5 est un schéma d'un circuit de contrôle des résistances chauffantes de stérilisation à partir d'un palpeur de température; et

— la figure 6 est un schéma d'un autre circuit de contrôle des résistances chauffantes de stérilisation sans palpeur de température.

La courbe C de la figure 1 représente la courbe de destruction thermique d'une souche de bacillus subtilis var. niger et donne le temps de traitement stérilisant minimal en secondes pour une température donnée en °C nécessaire à l'obtention d'un taux de destruction donné n. Ainsi, pour n=6, c'est-à-dire pour $10^6$ bactéries à détruire, à une température T=180°C, le temps de traitement stérilisant nécessaire sera 6×6,03 (D=6,03 pour T=180°C), c'est-à-dire 36,18 secondes. Si le temps d'arrêt entre deux avances successives est de 1,5 seconde, il faudrait répéter le traitement stérilisant pendant 25 arrêts de la bande thermoplastique ou bien allonger la zone de traitement stérilisant de façon que sa longueur corresponde à 25 pas d'avance. Ceci ne peut être réalisé soit pour des raisons d'encombrement, soit pour des raisons d'effondrement de la bande thermoplastique, qui doit être thermoformée dès qu'elle se trouve, sur toute son épaisseur, à la température de ramollissement. Par contre, si l'on utilise une température stérilisante de 230°C, on obtient D=0,1 seconde, donc pour n=6 un temps de traitement stérilisant de 0,6 seconde, de sorte que l'on pourra effectuer ce traitement pendant un arrêt entre deux pas d'avance de la bande thermoplastique.

Pour éviter une surchauffe de la bande, on pourra même stériliser avec une température de 220°C en augmentant le temps de traitement en conséquence (t=6×0,229=1,374 seconde). Ce diagramme montre aussi que pour une température de 210°C la durée de traitement est égale à 6×0,5=3 secondes de sorte que le traitement devrait s'appliquer à la bande thermoplastique pendant deux arrêts successifs et la zone de traitement stérilisant devrait avoir une longueur égale à deux pas d'avance.

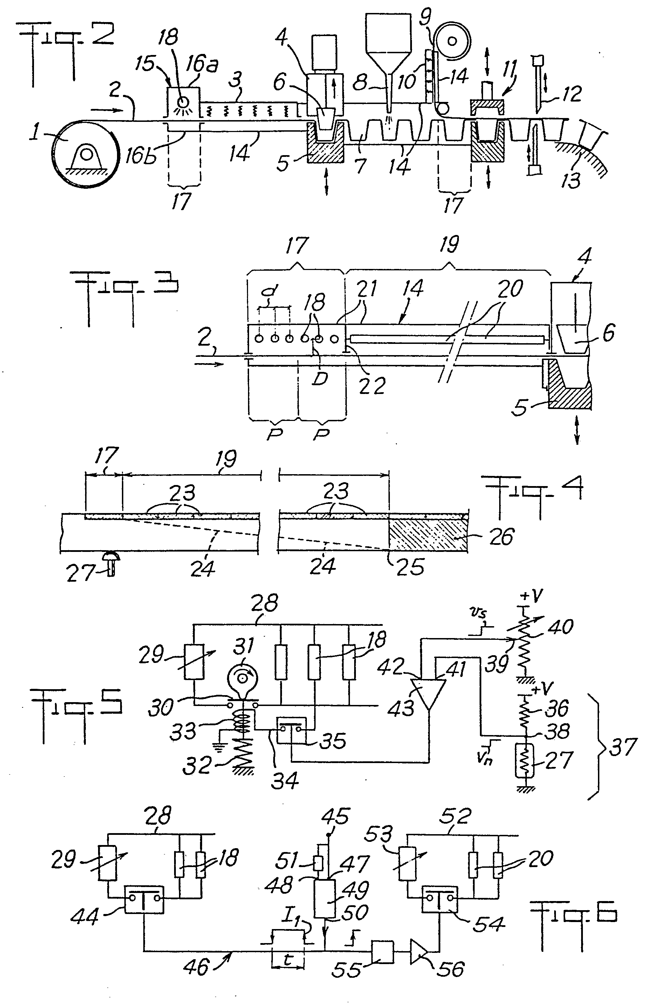

Sur la figure 2 est représenté le schéma d'une installation de conditionnement stérile pour un produit stérile liquide, pâteux ou pulvérulent. Cette installation comportant une bobine de bande thermoplastique 1 à partir de laquelle on déroule une bande thermoplastique 2 par mouvements pas à pas, une boîte de chauffe 3 comportant plusieurs résistances chauffantes et destinée à porter la matière constitutive de la bande 2 à sa température de ramollissement sur toute l'épaisseur de ladite bande 2, un dispositif de thermoformage 4 à un moule 5 et poinçon 6 mobiles et destiné à réaliser des récipients 7, un poste de remplissage 8, une bande à couvercle 9 associée à système de stérilisation 10, un dispositif de scellement 11, un dispositif de découpe 12 pour les récipients remplis et fermés 7 et une rampe d'évacuation 13, une enceinte stérile 14 étant prévue de part et d'autre de la bande 2 à partir de la boîte de chauffe 3 jusqu'à l'amont du dispositif de scellement 11. En outre, cette enceinte stérile 14 englobe aussi le système de stérilisation 10 (boîte de chauffe) de la bande à couvercle 9.

Etant donné que les installations de conditionnement stérile sont connues d'une façon générale (voir par exemple brevet américain 3,530,641), il n'est pas nécessaire de les décrire ici en détail.

Le dispositif de chauffage stérilisant 15 est disposé de préférence immédiatement en amont de la boîte de chauffe 3, mais il pourrait également être disposé entre ladite boîte 3 et le dispositif de thermoformage 4.

Le dispositif de chauffage stérilisant 15 comprend une enceinte 16 en deux parties 16a et 16b qui sont disposées de part et d'autre de la zone à traiter 17 de la bande thermoplastique 2. Dans cette enceinte 16 de même que dans l'enceinte 14 est maintenue une atmosphère stérile en légère surpression par rapport à la pression ambiante extérieure, ces deux enceintes 14 et 16 communiquant entre-elles le long du passage prévu pour la bande thermoplastique 2. A l'intérieur de la partie supérieure 16a de l'enceinte 16 est disposé au moins un corps rayonnant 18 tel qu'une résistance électrique en forme de fil ou de bâton et susceptible d'être porté à une température supérieure de 180°C et de préférence à 200°C et ceci de façon pratiquement instantanée. Pour faire fonctionner le corps rayonnant ou bâtons de chauffage 18, on prévoit une source à tension réglable qui est connectée aux bâtons de chauffage 18 par l'intermédiaire d'un circuit d'alimentation électrique dans lequel est monté un interrupteur ou commutateur actionné de façon intermittente et de telle sorte que lesdits bâtons chauffent pendant un laps de temps très court, de l'ordre de quelques secondes seulement, en fonction des paramètres de traitement choisis, la zone à traiter 17 de la bande thermoplastique 2 à une température supérieure au point de ramollissement (température de ramollissement). Les dimensions de la zone à traiter 17 par le chauffage stérilisant correspondent d'une part, à la largeur de la bande 2 (à l'exception de deux petites zones marginales) et, d'autre part, dans le sens longitudinal de la bande 2, à la longueur d'un à trois pas d'avance de celle-ci, longueur de pas déterminée par la longueur du tronçon de bande travaillé en une seule opération dans le dispositif de thermoformage 4. Comme déjà mentionné en liaison avec la figure 1, on réalise le traitement thermique intermittent des zones successives 17 en utilisant une source de chaleur fixe 18 et en adaptant la température de traitement au nombre des bactéries à détruire par zone 17 et à 1 à 3 cycles de traitement de la bande 2, où ledit cycle correspond au temps entre deux mouvements d'avance de la bande 2.

En raison de la durée très courte de l'application de la chaleur, seulement une très mince couche superficielle de la bande thermoplastique 2 est portée, pendant un temps donné, à une température nécessaire à la destruction souhaitée d'un nombre déterminé de bactéries, tandis que le reste de l'épaisseur de la bande 2 conserve pratiquement sa température puisque la matière thermoplastique est un très mauvais conducteur de chaleur. On met donc ici à profit la mauvaise conductibilité thermique de la matière thermoplastique, c'est-à-dire la faible capacité de pénétration de chaleur, pour réaliser un traitement thermique stérilisant éclair à température élevée comparable à un traitement à la flamme pour détruire dans une ambiance stérile tous les organismes polluants à la surface de la bande thermoplastique 2, surface constituant ultérieurement la face intérieure des récipients 7.

Sur la figure 3 est représentée la partie amont de l'enceinte stérile 14, partie disposée en amont du dispositif de thermoformage 4 et comportant, au dessus de la bande thermoplastique 2, une première zone dite zone stérilisante correspondant au dispositif de chauffage stérilisant éclair 15, et une deuxième zone dite zone de chauffage de ramollissement correspondant à la boîte de chauffe 3 produisant, en service continu, une énergie thermique, c'est-à-dire une température, beaucoup plus faible que celle utilisée pour le traitement stérilisant intermittent.

Pour des bâtons chauffants de 50 cm de longueur utile et d'un diamètre de 1,0 cm, la puissance maximale de chauffage est de l'ordre de 3 000 Watts. Avec des bâtons chauffants 18 du type précité et suivant la disposition indiquée ci-dessous, il est possible d'appliquer uniformément à la surface de la bande thermoplastique 2, dans la zone de traitement considérée une densité de puissance de chauffage de l'ordre de 25 Watts/cm2. Ils sont disposés parallèlement entre eux et à la bande 2 et de préférence transversalement au sens d'avance de ladite bande 2. La distance entr'axe $d$ entre les bâtons de chauffage 18 est de l'ordre de 2 cm et la distance D entre l'axe des bâtons 18 et la bande 2 est de l'ordre de 5 cm. Comme on peut le voir sur la figure 3, la longueur de la zone stérilisante 17 correspond dans le cas de ce mode de réalisation à deux pas d'avance P de la bande thermoplastique 2, tandis que la longueur de la zone de chauffage ramollissant 19 se raccordant à la zone de chauffage stérilisant 17 est d'une longueur au moins égale et de préférence plusieurs fois supérieure à celle de la zone stérilisante 17 et suffisante pour porter la bande thermoplastique 2 à la température de ramollissement sur toute son épaisseur. Les résistances de chauffage 20 utilisées dans la zone de chauffage ramollissant 19, c'est-à-dire dans la boîte chauffe 3, sont avantageusement du même type que celles utilisées dans la zone stérilisante 17, à savoir à réponse thermique instantanée. Ces résistances ou bâtons de chauffage 20 sont disposés parallèlement entre eux et à la bande thermoplastique avec une distance entr'axe de l'ordre de 2 cm et une distance à la bande thermoplastique 2 de l'ordre de 5 cm et s'étendent soit dans le sens longitudinal (voir figure 3), soit dans le sens transversal de ladite bande 2. Les résistances de chauffage ramollissant 20 sont connectées en parallèle à une source de tension réglable qui est ajustée, de telle sorte que la température rayonnée par les résistances 20 soit constante et se trouve à une valeur correspondant à la température de ramollissement de la bande thermoplastique 2 et comprise entre 110°C et 140°C.

Il est à noter que la hotte supérieure 21 de la partie amont de l'enceinte stérile 14, hotte supérieure 21 recouvrant la bande thermoplastique 2 dans la zone de stérilisation 17 et la zone de ramollissement 19 situées en amont du dispositif de thermoformage 4, est, en principe, montée à poste fixe, mais est tout de même conçue de façon à être rapidement démontable. Le montage à poste fixe de la hotte supérieure 21 a l'avantage de permettre le maintien de l'ambiance stérile dans cette partie de l'enceinte stérile 17, même lors d'un arrêt prolongé de la bande thermoplastique 2, arrêt pendant lequel les résistances à réponse thermique instantanées 18 et 20 dont déconnectées et mises hors circuit, Par contre, pendant le fonctionnement normal de l'installation de conditionnement stérile, c'est-à-dire pendant l'avance pas à pas de la bande thermoplastique 2, les résistances de chauffage ramollissant 20 sont branchées en permanance à leur source de tension, tandis que les résistances de chauffage stérilisant sont connectées de façon intermittente, à leur source de tension correspondante. Afin d'éviter une intéraction entre les zones de chauffage de régimes différents 17 et 19, la hotte supérieure 21 comporte à la limite séparative de ces deux zones 17 et 19 un écran isolant vertical 22 qui descend jusqu'au niveau de la bande thermoplastique 2 et peut servir en même temps à la fixation des extrémités des résistances de chauffage ramollissant 20.

Sur la figure 4 sont représentés schématiquement les modes de traitement thermique auxquels est exposée la bande thermoplastique 2. Dans la zone de stérilisation 17, la surface de la bande thermoplastique 2, surface constituant ultérieurement la face interne des récipients thermoformés, subit pendant quelques dixièmes de seconde à quelques secondes seulement, en une ou plusieurs fois, un rayonnement thermique à température élevée (de 180°C à 230°C), la durée et la température de traitement étant fonction du taux de destruction choisi n (au moins égal à 3). Compte-tenu de la faible conductivité thermique des matières thermoplastiques (coefficients de conductibilité thermique en kcal/m h °C étant pour du polyéthylène de 0,26 à 0,35, pour du polypropylène de 0,15 à 0,19, pour du polystyrène 0,14, pour du chlorure de polyvinyle de 0,12 à 0,14), le pouvoir de pénétration de ce traitement éclair comparable à un traitement à la flamme est très faible et ne dépasse pas une profondeur de 1/10ème de mm pendant le laps de temps de traitement très court.

Dans la zone de stérilisation 17, la surface de la bande thermoplastique 2 subit donc suivant des zones successives superficielles 23, le traitement stérilisant à l'arrêt entre deux pas d'avance successifs de la bande 2. Aussitôt après avoir subi le traitement de stérilisation, la zone stérilisée 23 est transférée avec la partie correspondante de la bande 2 dans la zone de chauffage ramollissant 19 où elle séjourne pendant un temps correspondant à plusieurs pas d'avance et d'arrêts et suffisant pour que la partie de bande arrivant devant le dispositif de thermoformage se trouve tout juste à sa température de ramollissement sur toute l'épaisseur de la bande 2. On a indiqué par la courbe 24 la progression de la température de ramollissement dans l'épaisseur de la bande thermoplastique 2. On comprend qu'à partir du point 25 situé sur la face inférieure de la bande 2, celle-ci se trouve à la température de ramollissement sur toute son épaisseur de sorte que le tronçon de bande 26 situé en aval du point 25 est prêt au thermoformage.

En dessous de la zone de stérilisation 17 est prévu un palpeur thermique 27 appliqué contre la face inférieure non stérilisée de la bande thermoplastique 2. Selon l'épaisseur et la nature de la bande 2, ce palpeur thermique va détecter une température croissante dans le temps en fonction du coefficient de conductibilité de la matière thermoplastique. Il est donc possible de détecter avec le palpeur thermique 27 une valeur de température dite de seul qui correspond, pour une température de stérilisation à laquelle est exposée la face supérieure de la bande 2, à une durée d'exposition de cette face à ladite température de stérilisation. Autrement dit, le palpeur thermique 27 sert ici à déterminer la durée d'application du traitement thermique stérilisant et à produire un signal de commande pour interrompre d'une façon instantanée le traitement thermique stérilisant.

Sur la figure 5, on peut voir les résistances de chauffage stérilisant 18 connectées en parallèle par un circuit 28, à une source de tension réglable 29 qui est ajustée de telle sorte que lesdites résistances 18 à réponse thermique instantanée, c'està-dire sans inertie thermique notable, rayonnent une chaleur à température constante comprise entre 180°C et 230°C. Dans le circuit d'alimentation 28 est interposé un interrupteur principal 30 dont la fermeture est commandée par exemple mécaniquement par une came 31 à la fin de chaque pas d'avance de la bande thermoplastique 2, cette came 31 étant par exemple reliée au mécanisme d'entraînement de la bande 2. De ce fait, les résistances de stérilisation 18 sont alimentées dès l'arrêt de la bande 2. L'interrupteur principal 30 est maintenu dans sa position de fermeture à l'encontre de la force d'un ressort de rappel 32, à l'aide d'un électroaimant dont la bobine 33 est branchée en dérivation sur le circuit d'alimentation 28 en aval de l'interrupteur principal 30. Dans le circuit de dérivation 34 reliant la bobine 33 au circuit d'alimentation 28 est prévu un interrupteur secondaire 35 dont l'ouverture momentanée est commandée à partir du palpeur thermique 37. L'interrupteur secondaire 35 est du type à fermeture automatique, par exemple provoquée par un ressort de rappel non représenté. Compte-tenu de cet agencement, l'alimentation des résistances 18 est interrompue dès que l'interrupteur secondaire 35 s'ouvre et provoque l'ouverture de l'interrupteur principal 30 qui, dès le nouvel arrêt suivant l'avance d'un pas de la bande 2 sera refermé par la came 31 et permettra ainsi un nouvel allumage éclair des résistances 18 tant que l'interrupteur secondaire 35 reste fermé.

Le palpeur thermique 27 forme avec une résistance 36 un diviseur de potentiel 37 branché entre la masse et un potentiel+V. Le signal Vn prélevé au point milieu 38 de ce diviseur 37 a une tension représentative de la température détectée par le palpeur 27.

Une tension de seul ajustable Vs correspondant à la température de seuil à détecter par le palpeur 27 est prélevée au curseur 39 d'un potentiomètre 40. Les tensions Vn et Vs sont appliquées aux bornes d'entrée 41, 42 d'un comparateur 43 dont la sortie est connectée à l'élément de commande de l'interrupteur secondaire 35 qui peut être un relais électromagnétique. Lorsque la tension Vn atteint la tension de seuil Vs, le comparateur 43 délivre un signal de sortie qui commande l'ouverture momentanée de l'interrupteur secondaire 35. Le temps qui s'écoule entre chaque fermeture de l'interrupteur principal 30 et la délivrance du signal de sortie du comparateur 43, est celle du laps de temps pendant lequel les résistances 18 sont allumées.

Sur la figure 6 est représenté un autre circuit de commande des résistances de chauffage de stérilisation 18 branchées à la source de tension réglable 29 par le circuit 28 muni d'un interrupteur principal 44 qui se ferme lorsque son organe de commande reçoit une impulsion, par exemple à un niveau haut, et s'ouvre lorsque le signal appliqué au circuit de commande est au niveau bas. L'impulsion $I_1$ est engendrée par un signal appliqué à la borne d'entrée 45 d'un circuit de commande 46 et produit par, ou correspondant à l'arrêt de la bande 2 après un pas d'avance. Ce signal d'arrêt est appliqué directement à l'une (47) des deux entrées 47, 48 d'une bascule bistable 49 et envoyé de la sortie 50 de celle-ci, sous forme d'une impulsion positive $I_1$, à l'organe de commande de l'interrupteur principal 44 qui se ferme aussitôt et permet l'allumage sans retard des résistances 18. Le signal d'arrêt est également envoyé, mais avec un retard prédéterminé, à la deuxième entrée 48 de la bascule bistable 49 par l'intermédiaire d'un circuit de retard ajustable d'un monostable réglable 51 raccordé d'une part à la borne d'entrée 45 et, d'autre part, à la deuxième entrée 48 de la bascule bistable 49. En réponse au signal d'arrêt retardé apparaît un niveau bas à la sortie 50 de la bascule 49, ce qui provoque l'ouverture de l'interrupteur 44 et donc la mise hors circuit instantanée des résistances 18. Le temps $t$ s'écoulant entre les fronts montant et descendant de l'impulsion $I_1$ est égal au laps de temps que dure un traitement éclaire de stérilisation.

Sur la figure 6 sont également représentées les résistances de chauffage 20 qui servent au ramollissement de la bande 2 et sont également à réponse thermique instantanée. Ces résistances 20 sont branchées au moyen d'un circuit 52 à une source de tension réglable 53 qui les maintient en permanence à une température constante comprise par exemple entre 110°C et 130°C et correspondant à la température de ramollissement de la bande thermoplastique 2. Un interrupteur 54 interposé dans le circuit d'alimentation 52 des résistances de chauffage de ramollissement 20 se trouve normalement en position fermée. Il permet la mise hors service desdites résistances 20 en cas d'arrêt prolongé de la bande 2, par exemple d'une durée égale à deux ou trois cycles comprenant chacun le temps pour l'avance d'un pas et celui de l'arrêt de la bande 2 entre deux pas d'avance successifs. A cet effet, la sortie 50 de la bascule bistable 48 est connectée à l'entrée d'une bascule monostable redéclenchable 55 qui doit être redéclenchée avant la fin d'un période de deux ou trois cycles. A défaut d'un tel redéclenchement, la sortie de la bascule monostable 55 émet un signal qui, après amplification dans un amplificateur 56, agit sur l'interrupteur 54 dans le sens de son ouverture. Grâce à cet agencement est réalisée une mise hors circuit automatique des résistances de chauffage de ramollissement 20 à partir du circuit de commande des résistances de chauffage de stérilisation 18.

Il se comprend de soi-même que des circuits de commande analogues peuvent être utilisés pour le chauffage de ramollissement et/ou de stérilisation de la bande à couvercle 9.

**Revendications**

1. Procédé de stérilisation et de ramollissement d'une bande (2) thermoplastique avancée pas à pas et destinée à la fabrication de récipients thermoformés (7) qui, après leur formage, sont remplis et scellés dans une atmosphère stérile, procédé selon lequel on soumet des zones successives de ladite bande à un traitement thermique pour assurer le ramollissement suffisant au thermoformage et la stérilisation de ladite bande, cette dernière opération étant réalisée, pendant une durée déterminée, à une température comprise entre 180°C et 230°C, caractérisé en ce que préalablement aux opérations de thermoformage, de remplissage et de scellement des récipients (7) dans une enceinte stérile, on expose uniformément, de façon intermittente, par zones successives et pendant un laps de temps maximal de cinq secondes, la surface de cette bande (2) constituant ultérieurement la face intérieure des récipients (7), à une chaleur sèche qui est produite par du rayonnement infrarouge d'une longueur d'onde adaptée au chauffage de surface, et que le temps de stérilisation à l'intérieur du laps de temps de cinq secondes est si court que ladite bande thermoplastique n'est portée que dans une couche superficielle très mince à la température égale ou supérieure à la température de ramollissement, tandis que la plus grande partie de l'épaisseur de la bande reste en dessous de la température de ramollissement.

2. Procédé selon la revendication 1, caractérisé en ce que l'on applique l'action brève de la chaleur stérilisante sur la bande (2) avant de procéder au ramollissement de celle-ci.

3. Procédé selon l'une des revendications 1 et 2, caractérisé en ce que l'on applique le traitement thermique stérilisant simultanément à un tronçon de bande dont la longueur est au moins égale à un pas d'avance et au plus à trois pas d'avance de la bande (2) thermoplastique.

4. Procédé selon l'une des revendications 1 à 3, caractérisé en ce que l'on limite la pénétration de l'énergie thermique nécessaire à la stérilisation à une épaisseur maximale de 1/10e de millimètre.

5. Procédé selon l'une des revendications 1 à 4, caractérisé en ce que l'on contrôle le temps d'application du traitement stérilisant à l'aide d'une horloge ou d'un circuit de retard ajustable ou d'un palpeur (27) thermique.

6. Procédé selon l'une des revendications 1 à 5, caractérisé en ce que l'on applique le traitement thermique stérilisant de la bande seulement à l'arrêt de celle-ci.

7. Procédé selon l'une des revendications 1 à 6, caractérisé en ce que l'on déclenche le traitement stérilisant intermittent dès l'arrêt de la bande thermoplastique (2) après un pas d'avance.

8. Procédé selon l'une des revendications 1 à 7, caractérisé en ce que pour le temps $t$ de traitement thermique stérilisant ($t$ exprimé en secondes) nécessaire pour détruire $10^n$ bactéries par la chaleur sèche, on choisit une température T comprise entre 180°C et 230°C, qui pour un exposant n donné, donne une valeur D lue sur le diagramme de la figure 1, de sorte que t soit au plus égal à cinq secondes ($t = n \times D$).

9. Procédé selon l'une des revendications 1 à 8, caractérisé en ce que l'on utilise, tout au moins pour le chauffage de stérilisation des résistances (18) agissant en tant qu'émetteurs de rayonnement infrarouge à ondes courtes dont le maximum d'émission de rayonnement se situe aux longueurs d'ondes comprises entre 1,2 $\mu$ et 1,4 $\mu$m.

10. Dispositif de chauffage stérilisant d'une bande thermoplastique (2) avancée pas à pas et destinée à la fabrication de récipients (7) thermoformés, remplis et scellés dans une atmosphère stérile, du type comprenant dans une enceinte stérile (14) des résistances de chauffage de stérilisation (18), caractérisé en ce que ces résistances de chauffage (18) sont du type à réponse thermique instantanée et sont raccordées, de façon intermittente, à une source (29) de tension pour une durée réglable par l'intermédiaire d'un circuit de commande (par exemple 46).

11. Dispositif de chauffage selon la revendication 10, caractérisé en ce que le circuit de commande comprend un palpeur thermique (27) appliqué contre la bande thermoplastique (2).

12. Dispositif de chauffage selon la revendication 11, caractérisé en ce que le circuit de commande (46) comprend un monostable (51) ou circuit de retard ajustable susceptible d'agir sur un interrupteur (44) interposé dans le circuit d'alimentation (28) des résistances de chauffage de stérilisation (18).

13. Dispositif de chauffage selon l'une des revendications 10 à 12, caractérisé en ce que l'enceinte (16), comportant aussi bien les résistances (18) de chauffage de stérilisation que les résistances (20) de chauffage de ramollissement, est montée à poste fixe.

14. Dispositif de chauffage selon l'une des revendications 10 à 13, caractérisé en ce qu'au moins les résistances (18) de chauffage de stérilisation sont constituées par des tubes en verre de silice ayant une face arrière métallisée.

**Patentansprüche**

1. Verfahren zum Sterilisieren und Erweichen eines thermoplastischen Bands (2)

— das schrittweise vorgeschoben wird und zur Herstellung von warmgeformten Behältern (7) bestimmt ist, die nach ihrer Formung in einer sterilen Atmosphäre gefüllt und versiegelt werden,
— gemäß welchem Verfahren aufeinanderfolgende Zonen des Bands einer Wärmebehandlung unterworfen werden, um das ausreichende Erweichen beim Warmformen und das Sterilisieren des Bands zu gewährleisten,
— wobei dieser letztere Vorgang während einer gegebenen Dauer bei einer Temperatur zwischen 180°C und 230°C ausgeführt wird,

dadurch gekennzeichnet,

— daß vor den Vorgängen des Warmformens, Füllens und Versiegelns des Behälters (7) in einem sterilen Gehäuse die zuletzt die Innenfläche der Behälter (7) bildende Oberfläche dieses Bands (2) gleichmäßig, intermittierend, in aufeinander folgenden Zonen und während einer maximalen Zeitdauer von 5 Sekunden einer trockenen Wärme ausgesetzt wird, die durch Infrarotstrahlung mit einer zum Erhitzen der Oberfläche geeigneten Wellenlänge erzeugt wird, und
— daß die Sterilisierungszeit innerhalb der Zeit von 5 Sekunden so kurz ist, daß das thermoplastische Band nur in einer sehr dünnen Oberflächenschicht auf die Temperatur gebracht wird, die gleich oder größer als die Erweichungstemperatur ist, während der größte Teil der Dicke des Bands unterhalb der Erweichungstemperatur bleibt.

2. Verfahren nach Anspruch 1, gekennzeichnet

— durch Anwendung der kurzen Wirkung der sterilisierenden Wärme auf das Band 2 vor dessen Erweichungsvorgang.

3. Verfahren nach einem der Ansprüche 1 und 2, gekennzeichnet

— durch Anwenden der sterilisierenden Wärmebehandlung gleichzeitig bei einem Bandabschnitt, dessen Länge wenigstens gleich einem Vorschubschritt und höchstens gleich drei Vorschubschritten des thermoplastischen Bands ist.

4. Verfahren nach einem der Ansprüche 1 bis 3, gekennzeichnet,

— durch Begrenzen des Eindringens der zum Sterilisieren erforderlichen Wärmeenergie auf eine maximale Dicke von 0,1 mm.

5. Verfahren nach einem der Ansprüche 1 bis 4, gekennzeichnet,

— durch Kontrollieren der Anwendungszeit der sterilisierenden Behandlung mittels einer Uhr oder einer einstellbaren Verzögerungsschaltung oder eines Thermofühlers (27).

6. Verfahren nach einem der Ansprüche 1 bis 5, gekennzeichnet,

— durch Anwenden der sterilisierenden Wärmebehandlung des Bands nur bei dessen Stillstand.

7. Verfahren nach einem der Ansprüche 1 bis 6, gekennzeichnet,

— durch intermittierendes Auslösen der sterilisierenden Wärmebehandlung ab dem Stillstand des thermoplastischen Bands (2) nach einem Vorschubschritt.

8. Verfahren nach einem der Ansprüche 1 bis 7, dadurch gekennzeichnet,

— daß für die zum Zerstören von $10^n$ Bakterien erforderliche Zeit t (in Sekunden) der sterilisierenden Wärmebehandlung durch trockene Wärme eine Temperatur T zwischen 180°C und 230°C gewählt wird, die für einen gegebenen Exponenten n einen im Diagramm von Fig. 1 abgelesenen Wert D ergibt, derart, daß t höchstens gleich 5 Sekunden ist (t=n×D).

9. Verfahren nach einem der Ansprüche 1 bis 8, dadurch gekennzeichnet,

— daß wenigstens für die sterilisierende Erhitzung Widerstände (18) verwendet werden, die als Infrarotstrahler für kurze Wellen wirken, deren Strahlungsemissionsspektrum bei Wellenlängen zwischen 1,2 $\mu$ und 1,4 $\mu$m liegt.

10. Heizvorrichtung zum Sterilisieren eines thermoplastischen Bands (2),

— das schrittweise vorgeschoben wird und zur Herstellung von warmgeformten Behältern (7) bestimmt ist, die in einer sterilen Atmosphäre gefüllt und versiegelt werden,
— von der Bauart mit in einem sterilen Gehäuse (14) angeordneten sterilisierenden Heizelementen (18),

dadurch gekennzeichnet,

— daß die Heizwiderstände thermisch sofort ansprechen und an eine Spannungsquelle (19) während einer Dauer intermittierend angeschlossen sind, die durch einen Steuerkreis (z.B. 46) einstellbar ist.

11. Heizvorrichtung nach Anspruch 10, dadurch gekennzeichnet,

— daß der Steuerkreis einen auf das thermoplastische Band (2) gedrückten Thermofühler (27) aufweist.

12. Heizvorrichtung nach Anspruch 11, dadurch gekennzeichnet,

— daß der Steuerkreis (46) einen einstellbaren monostabilen Multivibrator (51) oder Verzögerungskreis aufweist, der auf einen Schalter (44) im Speisekreis (28) für die sterilisierenden Heizwiderstände (18) einwirken kann.

13. Heizvorrichtung nach einem der Ansprüche 10 bis 12, dadurch gekennzeichnet,

— daß das Gehäuse (16), das die sterilisierenden Heizwiderstände (18) und die erweichenden Heizwiderstände (20) aufweist, feststehend befestigt ist.

14. Heizvorrichtung nach einem der Ansprüche 10 bis 13, dadurch gekennzeichnet,

— daß wenigstens die sterilisierenden Heizwiderstände (18) aus Quarzrohren mit einer metallisierten Rückseite bestehen.

**Claims**

1. Method of sterilizing and softening a thermoplastic band (2) which is moved forward stepwise and designed to manufacture thermoshaped containers (7) which, once shaped, are filled and sealed in a sterile atmosphere, method consisting in subjecting successive areas of said band to a heat treatment to obtain the softening necessary for thermo-shaping and sterilizing said band, this last operation being performed, for a predetermined duration, at a temperature varying between 180°C and 230°C, characterized in that prior to the containers (7) thermo-shaping, filling and sealing operations which take place in a sterile enclosure, the surface of said band (2) which is to become the inner face of the containers (7), is exposed uniformly, intermittently, by successive zones, and for a maximum period of five seconds, to a dry heat produced by infrared radiations of a wavelength adapted to the surface heating, and in that the sterilizing time which is included in the aforesaid period of five seconds, is so short that said thermoplastic band is brought to the temperature equal to or higher than the softening temperature only through a very thin superficial layer, whereas most of the thickness of said band remains below the softening temperature.

2. Method according to claim 1, characterized in that the brief action of sterilizing heat is applied to the band (2) before said band is softened up.

3. Method according to one of claims 1 and 2, characterized in that the sterilizing heat treatment is applied simultaneously to a section of band whose length is at least equal to one step forward and at the most to three steps forward of the thermoplastic band (2).

4. Method according to one of claims 1 to 3, characterized in that the penetration of the heat energy necessary for sterilizing is limited to a maximum thickness of one tenth of a millimetre.

5. Method according to one of claims 1 to 4, characterized in that the sterilizing treatment application period is controlled by means of a clock or of an adjustable time-delay circuit or of a heat dial (27).

6. Method according to one of claims 1 to 5, characterized in that the band sterilizing heat treatment is applied only when said band has stopped moving.

7. Method according to one of claims 1 to 6, characterized in that the intermittent sterilizing treatment is initiated immediately the thermoplastic band (2) has stopped after moving one step forward.

8. Method according to one of claims 1 to 7, characterized in that for the period $t$ of sterilizing heat treatment ($t$ being expressed in seconds) necessary to destroy $10^n$ bacteria through dry heat, a temperature T is selected which can vary between 180°C and 230°C, and which for a given exponent n, gives a value D read on the diagram of Figure 1, such that $t$ is at the most equal to five seconds ($t = n \times D$).

9. Method according to one of claims 1 to 8, characterized in that heating elements 18 are used, at least for producing the sterilizing heat, which heating elements act as a short wave infrared radiation transmitter whose maximum radiation transmission is situated at a wavelength between 1.2 $\mu$ and 1.4 $\mu$m.

10. Heating device for sterilizing a thermoplastic band (2) which is moved forward stepwise and designed to manufacture thermo-shaped containers (7), which are filled and sealed in a sterile atmosphere, of the type comprising inside a sterile enclosure (14) sterilization heating elements (18) characterized in that said heating elements (18) are of the type with instant heat response and are connected, intermittently, to a voltage source (29) for a duration which is adjustable by means of a control circuit (such as 46).

11. Heating device according to claim 10, characterized in that the control circuit comprises a heat probe (27) which is applied against the thermoplastic band (2).

12. Heating device according to claim 11, characterized in that the control circuit (46) comprises a monostable (51) or adjustable time-delay circuit able to actuate a switch (44) interposed in the circuit (28) feeding the sterilization heating elements (18).

13. Heating device according to one of claims 10 to 12, characterized in that the enclosure (16), comprising both the sterilization heating elements (18) and the softening heating elements (20), is fixedly mounted.

14. Heating device according to one of claims 10 to 13, characterized in that at least the sterilization heating elements (18) are constituted by tubes of silica glass with a metal-plated back face.

Fig-1

Log D   D en secondes

| Log D | D en secondes |
|---|---|
| 1,7 | 50 |
| 1,3 | 20 |
| 1,0 | 10 |
| 0,7 | 6,03 / 5 |
| 0,3 | 2 |
| 0 | 1 |
| −0,3 | 0,5 |
| −0,64 | 0,229 |
| −0,7 | 0,2 |
| −1 | 0,1 |
| −1,3 | 0,05 |
| −1,7 | 0,02 |

C

T en C°

150   160   170   180   190   200   210   220   230   240   250

Fig. 2

Fig. 3

Fig. 4

Fig. 5

Fig. 6